# EUROPÄISCHE PATENTSCHRIFT

(11) **EP 1 281 958 B1**
(45) Veröffentlichungstag und Bekanntmachung des Hinweises auf die Patenterteilung: **13.09.2006**
(21) Anmeldenummer: 02015971.1
(22) Anmeldetag: 18.07.2002
(51) Int. Cl.: G01N 33/02, G01N 27/416

(54) **Vorrichtung zum Befestigen eines Sensors**
Arrangement to attach a sensor
Dispositif pour fixer un capteur

(30) Priorität: 30.07.2001 DE 10137115
(43) Veröffentlichungstag der Anmeldung: 05.02.2003
(73) Patentinhaber: Endress + Hauser Conducta Gesellschaft für Mess- und Regeltechnik mbH + Co.KG., D-70839 Gerlingen (DE)
(72) Erfinder: Oppermann, Hans-Joachim, 7121 Gemmrigheim (DE); Exner, Detlef, 41516 Grevenbroich (DE)
(74) Vertreter: Andres, Angelika Maria

(56) Entgegenhaltungen:
- DD-A3- 243 407
- DE-A1- 19 720 504
- DE-A1- 19 721 965
- DE-U1- 9 211 897
- GB-A- 1 601 689
- US-A- 4 269 683

## Beschreibung

Die Erfindung bezieht sich auf eine Vorrichtung zum Befestigen eines Sensors, der zumindest eine physikalische und/oder chemische Prozeßgröße eines in einem Behälter befindlichen Mediums bestimmt und/oder überwacht. Bei der Prozeßgröße handelt es sich z. B. um die Temperatur, die Leitfähigkeit, den pH-Wert oder den Sauerstoffgehalt des Mediums. Der Behälter kann beispielsweise als Tank oder als Rohr ausgebildet sein.

Meßtechnische Vorrichtungen werden im Bereich der Nahrungs- und Lebensmittelindustrie vielfältig eingesetzt. Kommen diese Vorrichtungen in Kontakt mit den Nahrungsmitteln, müssen Sie aus verständlichen Gründen höchsten Hygiene-Anforderungen genügen. Die Hygiene-Anforderungen an die meßtechnischen Vorrichtungen werden von Normenausschüssen formuliert. Beispielhaft sei in diesem Zusammenhang die Europäische Norm EN 1672-2:1997 genannt, die den Status einer nationalen Deutschen Norm hat. Diese Norm ergänzt die allgemein gültigen wesentlichen Sicherheits- und Gesundheitsanforderungen der EG-Maschinenrichtlinie 89/392/EWG des Europäischen Rates durch detaillierte Anforderungen für Maschinen, die in der Nahrungs- und Lebensmittelindustrie eingesetzt werden.

Potentielle Sammelbecken für gesundheitsgefährdende Keime finden sich bevorzugt in Bereichen, in denen zwei Teilkomponenten einer Meßvorrichtung lösbar miteinander verbunden sind. Besonders kritisch sind relativ schmale und klein dimensionierte Zwischenräume. Beispielhaft sei an dieser Stelle der dem Prozeß zugewandte Kontaktbereich eines Sensors mit einer Prozeßarmatur genannt. Bei dem Sensor handelt es sich z. B. um eine pH-Elektrode, die den pH-Wert des Prozeßmediums bestimmt. Über die Prozeßarmatur ist der Sensor bzw. die pH-Elektrode an der Behälterwand oder in einer Rohrleitung derart befestigt, daß ein unmittelbarer Kontakt zwischen dem Sensor und dem Medium zustande kommt. Befindet sich in dem Kontaktbereich von Sensor und Prozeßarmatur ein Spalt, so kann das Medium in diesen Spalt eindringen und sich dort festsetzen. Schmale Spalte lassen sich bekannter-weise nicht oder nur unzureichend gründlich reinigen.

Das zuvor angesprochene Problem versucht man durch optimiert ausgestaltete Dichtungen in den Griff zu bekommen: So werden in der Norm EN 1672-2: 1997 Vorschläge unterbreitet, wie eine Dichtung zwischen zwei Teilkomponenten einer Meßvorrichtung ausgestaltet und angeordnet sein muß, damit sie den Hygiene-Vorschriften in der Lebensmittelindustrie genügt. Insbesondere wird in der Norm EN 1672-2: 1997, Seite 15 vorgeschlagen, als Dichtung einen O-Ring zu verwenden und diesen so dicht wie möglich am Prozeßmedium anzuordnen. Hierdurch wird einerseits eine Spaltbildung zwischen den beiden voneinander lösbaren Teilkomponenten vermieden, andererseits wird auch eine ausreichend gute Reinigbarkeit im Kontaktbereich sichergestellt. Allerdings wird in der Norm auch darauf verwiesen, daß aufgrund der Herstellungstoleranzen bei O-Ringen deren Kompression und damit die spaltfreie Abdichtung zum Prozeß hin ziemlich schwierig zu kontrollieren ist.

In der DE 197 21 965 A1 wird eine Meßarmatur und ein Verfahren zum Messen eines physikalischen Wertes vorgeschlagen. Für Meßzwecke wird die aus einem Elektrodenhalter und einer Meßelektrode gebildete Meßeinrichtung in die Strömung des Mediums ausgefahren, so daß der Elektrodenkopf in der Durchgangsöffnung des Elektrodenhalters von dem flüssigen oder gasförmigen Medium umströmt wird. Zu Wartungszwecken wird der Elektrodenhalter in die Buchse eingefahren, so daß die Meßarmatur nach außen hin abgedichtet wird. Die Abdichtung erfolgt in der jeweiligen Dichtposition über Dichtringe, die aufgrund ihrer Innenlage keine spaltfreie Abdichtung zum Prozess hin erlauben.

Eine weitere bekannte Lösung ist in der DE 197 20 504 A1 offenbart. In einer in einem Gehäuse axial gleitverschiebliche Innenhülse ist die Meßelektrode gelagert. Die Innenhülse bzw. zumindest der medienseitige Abschnitt der Innenhülse ist aus einem keramischen Material gefertigt oder trägt zumindest eine keramische Beschichtung. Die Innenhülse ist in einer Dichtbuchse geführt. Da das Material der Dichtbuchse weicher gewühlt ist als das Material der Innenhülse, wird zwischen die Dichtflächen gelangender Partikelschmutz in die Dichtbuchse eingedrückt.

Aus der DE 92 11 987 U1 ist eine Vorrichtung zu Positionierung einer Meßelektrode inner- und außerhalb eines Meßgehäuses bekannt geworden. Die Meßelektrode selbst ist in einem Schutzgehäuse angeordnet und wird zusammen mit diesem in dem Meßgehäuse oder außerhalb des Meßgehäuses positioniert. Das Bodenteil verschließt den Innenraum des Meßgehäuses, wenn die Meßelektode außerhalb des Meßgehäuses angeordnet ist. Zur Betätigung ist eine Schaltstange vorgesehen, die sowohl den Schutzkorb als auch die Meßelektrode trägt. Die Abdichtung des Spalts zwischen der Meßelektrode und der Schaltstange wird dadurch erreicht, daß zwischen dem Schaft der Meßelektrode und der diese umgebende Schaltstange, die in diesem Bereich als hülsenförmgies Endteil ausgebildet ist, eine Dichtung mittels eines endseitig ebenfalls als Hülse ausgeformten Elektrodenhalters, der in das Endteil der Schaltstange eingreift, vorgespannt wird. Insbesondere füllt die Dichtung durch Auswulstung den Spalt vollständig aus und zwar so weit, daß kein Totraum auftritt.

Der Erfindung liegt die Aufgabe zugrunde, eine Vorrichtung zur aseptischen Befestigung eines Sensors an einem Behälter vorzuschlagen.

Die Aufgabe wird dadurch gelöst, daß eine Prozeßarmatur vorgesehen ist, die einen Innenraum zur Aufnahme eines Sensors aufweist, wobei der Innenraum in eine Öffnung an einer Außenseite der Prozeßarmatur mündet und wobei in der Öffnung eine Formdichtung positioniert ist, wobei die Formdichtung auf der dem Prozeß abgewandten Seite eine Schulter mit einer im wesentlichen planaren Außenfläche aufweist, mit der sie an einem korrespondierenden Vorsprung an der Innenfläche der Prozeßarmatur anliegt, so daß sie nach dem Einbringen des Sensors einen Preßsitz in der Öffnung erreicht und den Innenraum der Prozeßarmatur spaltfrei zum Prozeß hin abdichtet.

Gemäß einer vorteilhaften Weiterbildung der erfindungsgemäßen Vorrichtung ist die Öffnung an der dem Prozeß zugewandten Stirnfläche der Prozeßarmatur vorgesehen. Besonders vorteilhaft ist es, wenn die Formdichtung im wesentlichen ringförmig ausgestaltet ist und zum Prozeß hin eine im wesentlichen planare Außenfläche aufweist.

Bevorzugt ist die Formdichtung so dimensioniert, daß sie bei Erreichen des Preßsitzes in der Öffnung leicht über die Außenfläche bzw. die Stirnfläche der Prozeßarmatur hinausragt.

Gemäß einer bevorzugten Ausführungsform der erfindungsgemäßen Vorrichtung weist die Formdichtung an ihrer dem Sensor zugewandten Innenfläche zumindest eine Vertiefung auf. Vorteilhafterweise ist die Vertiefung ringförmig ausgebildet. Da die Innenfläche der Formdichtung im wesentlichen nur zwei ringförmige Kontaktflächen mit dem Sensor aufweist, läßt sich der Sensor aufgrund der verringerten Haftkräfte relativ einfach in die Formdichtung hineinschieben bzw. aus der Formdichtung herausziehen. Als Materialien für die Formdichtung sind beispielsweise Silikon, EPDM oder FPM bestens geeignet.

Zwecks Befestigung des Sensors an der Prozeßarmatur ist an dem Sensor ein Gewinde vorgesehen; an der Innenfläche der Prozeßarmatur ist ein korrespondierendes Gewinde vorgesehen, so daß der Sensor über eine Schraubverbindung mit der Prozeßarmatur verbindbar ist. Um die erfindungsgemäße Vorrichtung an dem Behälter zu befestigen, ist an der Prozeßarmatur ein entsprechendes Befestigungsteil vorgesehen.

Prozeßarmaturen zur Befestigung eines Sensors an einem Behälter, welche in Verbindung mit der erfindungsgemäßen Vorrichtung eingesetzt werden können, sind aus dem Stand der Technik übrigens vielfältig bekannt. Beispielhaft seien die von der Anmelderin unter der Bezeichnung UniFit angebotenen und vertriebenen Prozeßarmaturen genannt.

Gemäß einer vorteilhaften Weiterbildung der erfindungsgemäßen Vorrichtung ist eine Leckage-Überwachung vorgesehen, die Information über die Dichtheit der Formdichtung liefert. Derartige Leckage-Dichtungen sind gleichfalls aus dem Stand der Technik bekannt und ergeben sich beispielsweise aus den Anforderungen des 3-A Sanitary Standards.

Die Erfindung wird anhand der nachfolgenden Zeichnungen näher erläutert. Es zeigt:
Fig. 1: einen Längsschnitt durch eine vorteilhafte Ausführungsform der erfindungsgemäßen aseptischen Befestigungsvorrichtung für eine pH-Elektrode,
Fig. 2: eine perspektivische Ansicht einer vorteilhaften Ausgestaltung der Formdichtung,
Fig. 3: einen Querschnitt durch die Formdichtung gemäß der Kennzeichnung III-III in Fig. 2 und
Fig. 4: eine gesonderte Darstellung des Details der Formdichtung, das in Fig. 3 mit IV gekennzeichnet ist.

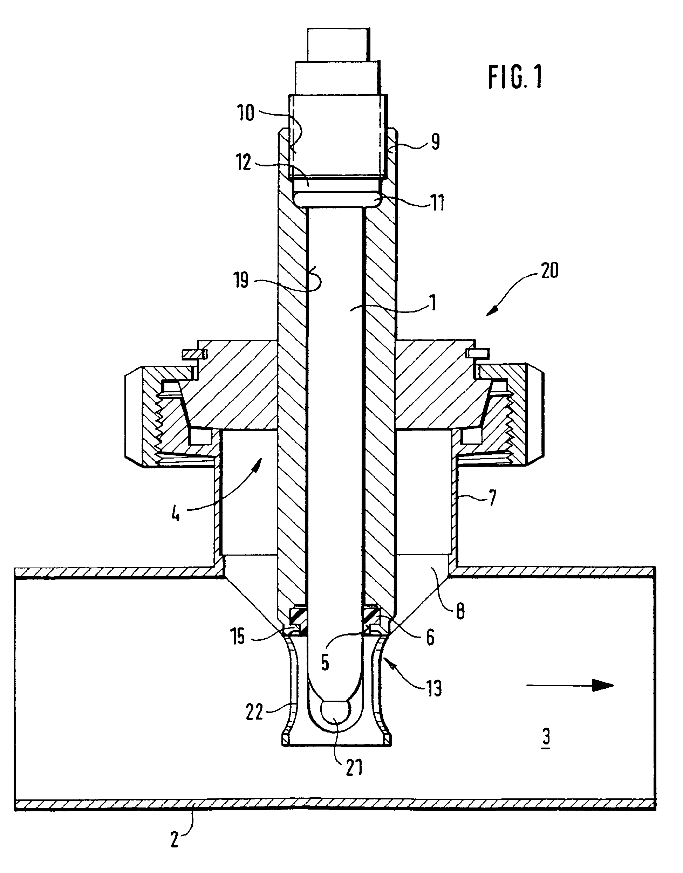

In Fig. 1 ist ein Längsschnitt durch eine vorteilhafte Ausführungsform der erfindungsgemäßen aseptischen Befestigungsvorrichtung für eine pH-Elektrode 1 dargestellt. Bei der Prozeßarmatur 4 handelt es sich im dargestellten Fall um eine Festeinbau-Prozeßarmatur 4, die von der Anmelderin unter dem Namen UniFit angeboten und vertrieben wird. Die Prozeßarmatur 4 ist über das Befestigungsteil 20 an dem Befestigungsstutzen 7 festgeschraubt. Der Befestigungsstutzen 7 ist üblicherweise in eine entsprechende Öffnung 8 des Behälters, hier des Rohres 2, eingeschweißt.
Das Rohr 2 wird von einem Medium 3 durchflossen, dessen pH-Wert mittels der pH-Elektrode 1 bestimmt und/oder überwacht wird. Der Stoßschutz 22 ist konzentrisch um die pH-Glasmembran 21 angeordnet und dient dazu, die pH-Glasmembran 21 vor mechanischen Einwirkungen zu schützen.

Der Innenraum der Prozeßarmatur 4 dient zur Aufnahme der pH-Elekrode 1. Die pH-Elektrode 1 ist derart in der Prozeßarmatur 4 befestigt, daß zumindest die pH-Glasmembran 21 im montierten Zustand mit dem Medium 3, das das Rohr 2 durchfließt, in Kontakt kommt. Um das Eindringen von Partikeln des Mediums 3 in den Spalt zwischen pH-Elektrode 1 und Prozeßarmatur 4 zu verhindern, ist die Formdichtung 6 vorgesehen. Diese Formdichtung 6 ist in der Öffnung 5 positioniert, die sich an der dem Prozeß zugewandten Stirnfläche 13 der Prozeßarmatur 4 befindet. Die Formdichtung 6 ist derart ausgestaltet, daß sie nach dem Einbringen der pH-Elektrode 1 einen Preßsitz in der Öffnung 5 erreicht und so den Innenraum der Prozeßarmatur 4 spaltfrei zum Prozeß hin abdichtet. Die pH-Elektrode wird von der dem Prozeß abgewandten Seite her in die Prozeßarmatur 4 eingebracht und dann mittels einer Schraubverbindung 9, 10 in die Prozeßarmatur 4 befestigt.

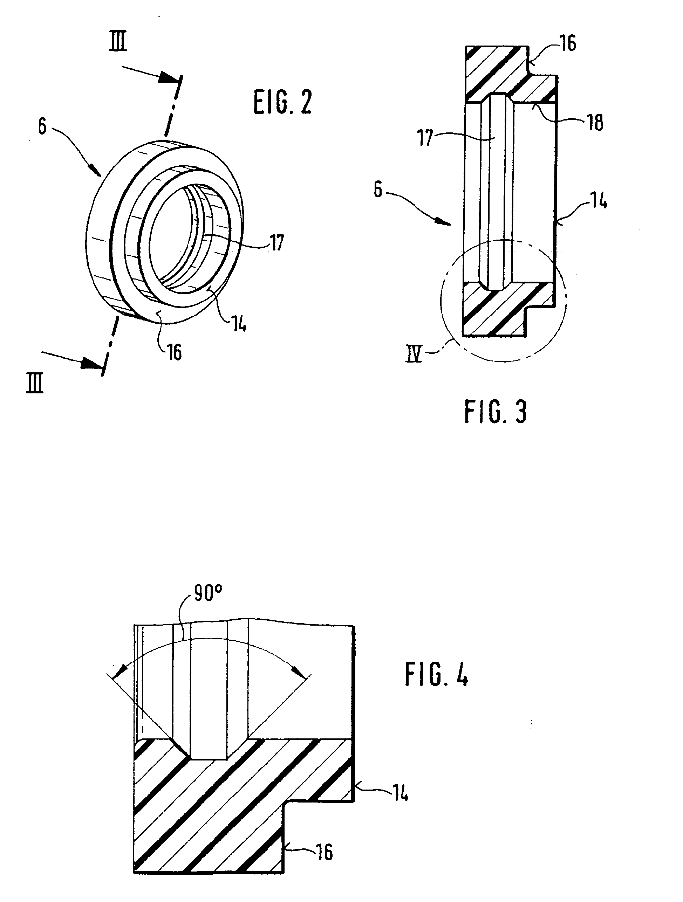

Eine vorteilhafte Ausgestaltung der Formdichtung 6 ist in den Figuren Fig. 2 bis Fig. 4 im Detail zu sehen. Während Fig. 2 eine perspektivische Ansicht der Formdichtung 6 zeigt, ist in Fig. 3 ein Querschnitt durch die Formdichtung gemäß der Kennzeichnung III - III in Fig. 2 gezeigt. In Fig. 4 ist das in Fig. 3 mit IV gekennzeichnete Detail noch einmal gesondert dargestellt.

Die Formdichtung 6 ist im wesentlichen ringförmig ausgestaltet ist und hat zum Prozeß hin eine im wesentlichen planare Außenfläche 14. Um den gewünschten Preßsitz in der Öffnung 5 zu erreichen, hat die Formdichtung 6 auf der dem Prozeß abgewandten Seite eine Schulter 16 mit einer im wesentlichen planaren Außenfläche. Mit der Schulter 16 liegt die Formdichtung 6 an einem korrespondierenden Vorsprung 23 an der Innenfläche 19 der Prozeßarmatur 4 an. Bevorzugt ist die Formdichtung 6 so dimensioniert, daß sie bei Erreichen des Preßsitzes in der Öffnung 5 leicht über die Stirnfläche 13 der Prozeßarmatur 4 hinausragt.

Wie anhand der Figuren Fig. 3 und Fig. 4 zu sehen ist, weist die Formdichtung 6 an ihrer dem Sensor 1 zugewandten Innenfläche 18 zumindest eine Vertiefung 17 auf. Vorteilhafterweise ist die Vertiefung 17 ringförmig ausgebildet. Da die Innenfläche 18 der Formdichtung 6 im wesentlichen nur zwei ringförmige Kontaktflächen mit dem Sensor 1 aufweist, läßt sich der Sensor 1 wegen der verringerten Haftkraft relativ einfach in die Formdichtung 6 bzw. die Prozeßarmatur 4 einschieben bzw. aus der Formdichtung 6 bzw. der Prozeßarmatur 4 herausziehen. Als geeignete Materialien für die Formdichtung 6 kommen beispielsweise Silikon, EPDM oder FPM in Frage.

### Bezugszeichenliste

- 1: pH-Elektrode
- 2: Rohr
- 3: Medium
- 4: Prozeßarmatur
- 5: Öffnung
- 6: Formdichtung
- 7: Befestigungsstutzen
- 8: Öffnung im Behälter
- 9: Außengewinde
- 10: Innengewinde
- 11: O-Ring
- 12: Dichtung
- 13: Stirnfläche der Prozeßarmatur
- 14: Außenfläche der Formdichtung
- 15: Vorsprung
- 16: Schulter
- 17: Vertiefung
- 18: Innenfläche der Formdichtung
- 19: Innenfläche der Prozeßarmatur
- 20: Befestigungsteil
- 21: pH-Glasmembran
- 22: Stoßschutz

## Patentansprüche

1. Vorrichtung zum aseptischen Befestigen eines Sensors (1), der zumindest eine physikalische und/oder chemische Prozeßgröße eines in einem Behälter (2) befindlichen Mediums (3) bestimmt und/oder überwacht,
mit einer Prozeßarmatur (4), die einen Innenraum zur Aufnahme des Sensors (1) aufweist, wobei der Innenraum an der dem Prozeß zugewandten Seite der Prozeßarmatur in eine Öffnung (5) mündet und wobei in der Öffnung (5) eine Formdichtung (6) positioniert ist, wobei die Formdichtung (6) auf der dem Prozeß abgewandten Seite eine Schulter (16) mit einer im wesentlichen planaren Außenfläche aufweist, mit der sie an einem korrespondierenden Vorsprung (15) an der Innenfläche (18) der Prozeßarmatur (4) anliegt, so daß sie nach dem Einbringen des Sensors (1) einen Preßsitz in der Öffnung (5) erreicht und den Innenraum der Prozeßarmatur (4) spaltfrei zum Prozeß hin abdichtet.

2. Vorrichtung nach Anspruch 1,
wobei die Öffnung (5) an der dem Prozeß zugewandten Stirnfläche (13) der Prozeßarmatur (4) vorgesehen ist.

3. Vorrichtung nach Anspruch 1,
wobei die Formdichtung (6) im wesentlichen ringförmig ausgestaltet ist und zum Prozeß hin eine planare Außenfläche (14) aufweist.

4. Vorrichtung nach Anspruch 1, 2 oder 3,
wobei die Formdichtung (6) an ihrer dem Sensor (1) zugewandten Innenfläche (18) zumindest eine Vertiefung (17) aufweist.

5. Vorrichtung nach Anspruch 4,
wobei die Vertiefung (17) ringförmig ausgebildet ist.

6. Vorrichtung nach einem oder mehreren der vorhergehenden Ansprüche,
wobei die Formdichtung (6) aus Silikon, EPDM oder FPM besteht.

7. Vorrichtung nach Anspruch 1,
wobei an dem Sensor ein Gewinde (9) vorgesehen ist,
wobei an der Innenfläche (18) der Prozeßarmatur (4) ein korrespondierendes Gewinde (10) vorgesehen ist und
wobei der Sensor (1) über die Schraubverbindung (9, 10) mit der Prozeßarmatur (4) verbunden ist.

8. Vorrichtung nach Anspruch 1 oder 7,
wobei an der Prozeßarmatur (4) ein Befestigungsteil (20) vorgesehen ist, über welches die Prozeßarmatur (4) mit Sensor (1) an dem Behälter (2) befestigbar ist.

9. Vorrichtung nach Anspruch 1,
wobei eine Leckage-Überwachung vorgesehen ist, die Information über die Dichtheit der Formdichtung (6) liefert.

## Claims

1. Apparatus for aseptically attaching a sensor (1), which sensor determines and/or monitors at least one physical and/or chemical process variable of a medium (3) disposed in a container (2),
having a process fitting (4), which has an interior space for accommodating the sensor (1), the interior space ending in an opening (5) on the process fitting side nearer to the process, and there being positioned in the opening (5) a pre-formed seal (6), the pre-formed seal (6) having, on the side further from the process, a shoulder (16) with a substantially planar outer face by which the said seal rests against a corresponding projection (15) on the inner face (18) of the process fitting (4) such that, once the sensor (1) has been inserted, the said seal achieves a press fit in the opening (5) and gaplessly seals the interior space of the process fitting (4) against the process.

2. Apparatus according to claim 1,
the opening (5) being provided in the end face (13) of the process fitting (4) nearer to the process.

3. Apparatus according to claim 1,
the pre-formed seal (6) being of a substantially annular design and having a planar outer face (14) nearer to the process.

4. Apparatus according to claim 1, 2 or 3,
the pre-formed seal (6) having at least one depression (17) on its inner face (18) nearer to the sensor (1).

5. Apparatus according to claim 4,
the depression (17) being of an annular design.

6. Apparatus according to one or more of the preceding claims,
the pre-formed seal (6) being made from silicone, EPDM or FPM.

7. Apparatus according to claim 1,
a thread (9) being provided on the sensor,
a corresponding thread (10) being provided on the inner face (18) of the process fitting (4), and
the sensor (1) being connected to the process fitting (4) by means of the screw connection (9, 10).

8. Apparatus according to claim 1 or 7,
there being provided on the process fitting (4) an attachment part (20), by means of which the process fitting (4), with the sensor (1), can be attached to the container (2).

9. Apparatus according to claim 1,
there being provided a leakage monitor, which supplies information about the tightness of the pre-formed seal (6).

## Revendications

1. Dispositif destiné à la fixation aseptique d'un capteur (1), qui détermine et/ou surveille au minimum une grandeur de process physique et/ou chimique d'un fluide (3) se trouvant dans un récipient (2),
doté d'une sonde de process (4), qui présente un espace intérieur destiné au logement du capteur (1), l'espace intérieur débouchant dans une ouverture (5) sur le côté orienté vers le process de la sonde de process et un joint profilé (6) étant positionné dans l'ouverture (5), le joint profilé (6) présentant sur le côté opposé au process un épaulement (16) avec une surface extérieure (14) essentiellement plane, avec lequel il repose contre une saillie (15) correspondante sur la surface intérieure (18) de la sonde de process (4), de telle sorte à obtenir, après l'introduction du capteur (1), un ajustement serré dans l'ouverture (5) et une étanchéité sans fente de l'espace intérieur de la sonde de process (4) par rapport au process.

2. Dispositif selon la revendication 1,
dans lequel l'ouverture (5) est prévue sur la surface frontale (13) côté process de la sonde de process (4).

3. Dispositif selon la revendication 1,
dans lequel le joint profilé (6) est conçu essentiellement en forme annulaire et présente une surface extérieure (14) plane par rapport au process.

4. Dispositif selon la revendication 1, 2 ou 3,
dans lequel le joint profilé (6) présente au minimum une gorge (17) sur sa surface intérieure (18) faisant face au capteur (1).

5. Dispositif selon la revendication 4,
dans lequel la gorge (17) est conçue en forme annulaire.

6. Dispositif selon une ou plusieurs des revendications précédentes,
dans lequel le joint profilé (6) est constitué de silicone, d'EPDM ou de FPM.

7. Dispositif selon la revendication 1,
dans lequel un filetage (9) est prévu sur le capteur,
dans lequel un taraudage (10) correspondant est prévu sur la surface intérieure (18) de la sonde de process (4) et
dans lequel le capteur (1) est relié avec la sonde de process (4) par l'intermédiaire de l'assemblage vissé (9, 10).

8. Dispositif selon la revendication 1 ou 7,
dans lequel est prévue, sur la sonde de process (4), une pièce de fixation (20) permettant de fixer la sonde de process (4) avec le capteur (1) sur le récipient (2).

9. Dispositif selon la revendication 1,
dans lequel est prévu un dispositif de surveillance de fuite, qui fournit l'information sur l'étanchéité du joint profilé (6).
